# EUROPÄISCHE PATENTANMELDUNG

(11) **EP 2 221 260 A2**
(43) Veröffentlichungstag der Anmeldung: **25.08.2010**
(21) Anmeldenummer: 10153776.9
(22) Anmeldetag: 17.02.2010
(51) Int. Cl.: B65G 47/90

(54) **Ein Greifelement zum Greifen von Kunststoffbehältnissen**

(30) Priorität: 20.02.2009 DE 102009009885
(71) Anmelder: Krones AG, 93073 Neutraubling (DE)
(72) Erfinder: Höllriegl, Thomas, 93158, Teublitz (DE); Wittmann, Christian, 93155, Hemau (DE)
(74) Vertreter: Bittner, Bernhard

(57) **Zusammenfassung**

Ein Greifelement (1) zum Greifen von Kunststoffbehältnissen mit Mündungen und insbesondere von Vorformlingen, mit einem Träger (2), an dem ein Greifkopf (4) angeordnet ist, der wenigstens teilweise in eine Mündung des Kunststoffbehältnisses einführbar ist. Erfindungsgemäß ist an dem Greifkopf (4) wenigstens ein Halteelement (6a, 6b, 6c, 6d, 6e) angeordnet, welches wenigstens abschnittsweise in einer bezüglich des Greifkopfes (4) radialen Richtung (R) bewegbar ist, um das Behältnis gegenüber dem Greifkopf (4) zu sichern.

## Beschreibung

Die vorliegende Erfindung bezieht sich auf ein Greifelement zum Greifen von Kunststoffbehältnissen und insbesondere von Vorformlingen. Derartige Vorformlinge werden im Stand der Technik verwendet, um im Rahmen des Herstellungsprozesses zu Kunststoffbehältnissen, wie PET-Flaschen, expandiert zu werden. Im Rahmen dieses Herstellungsprozesses werden dabei die Kunststoffvorformlinge zunächst erwärmt und anschließend in einer Blasmaschine expandiert. Während dieses Erwärmungsvorgangs werden die Vorformlinge mit Greifelementen transportiert.

Dabei ist es aus dem Stand der Technik bekannt, Greifelemente vorzusehen, welche in eine Mündung dieser Vorformlinge eingreifen, um diese zu halten. Dabei weisen jedoch unterschiedliche Vorformlinge oder auch unterschiedliche Typen von Vorformlingen teilweise leicht unterschiedliche Innenquerschnitte bzw. Innendurchmesser der Mündungen bzw. Flaschenhälse auf. Derartige unterschiedliche Durchmesser können jedoch dazu führen, dass Greifelemente einige Behältnisse nicht aufnehmen können, da deren Mündungsquerschnitte zu gering sind und andere Vorformlinge von diesen Greifelementen abrutschen. Die bisher aus dem Stand der Technik bekannten Greifelemente sind nur in der Lage, Durchmessertoleranzen im Bereich von +/- 0,2 mm zu verarbeiten.

Der vorliegenden Erfindung liegt daher die Aufgabe zugrunde, ein Greifelement zur Verfügung zu stellen, welches größere Toleranzen hinsichtlich der Vorformlinge bzw. deren Mündungsdurchmesser verarbeiten kann. Dies wird erfindungsgemäß durch Greifelemente nach Anspruch 1 erreicht. Vorteilhafte Ausführungsformen und Weiterbildungen sind Gegenstand der Unteransprüche.

Ein erfindungsgemäßes Greifelement zum Greifen von Kunststoffbehältnissen und insbesondere von Vorformlingen weist einen Träger auf, an dem ein Greifkopf angeordnet ist, der wenigstens teilweise in eine Mündung des Kunststoffbehältnisses einführbar ist.

Erfindungsgemäß ist an dem Greifelement wenigstens ein Halteelement angeordnet, welches wenigstens abschnittsweise in einer bezüglich des Greifkopfes radialen Richtung bewegbar und bevorzugt gegen die Innenwandung der Mündung pressbar ist, um das Behältnis gegenüber dem Greifkopf zu sichern. Unter einer Bewegbarkeit in einer radialen Richtung wird verstanden, dass wenigstens ein Bereich des Halteelements zumindest auch in der radialen Richtung bewegbar ist. Damit kann es sich auch um eine Bewegung handeln, welche bezüglich der radialen Richtung schräg ist oder auch um eine Schwenkbewegung bezüglich einer vorgegebenen Achse. Weiterhin ist es möglich, dass das Halteelement in seiner Gesamtheit in eine radiale Richtung bewegbar ist, es wären jedoch auch andere Bewegungen, wie insbesondere aber nicht ausschließlich Schwenkbewegungen, denkbar.

Durch dieses Halteelement, welches sich auch in der radialen Richtung bewegen kann, wird eine gewisse Toleranz hinsichtlich der zu greifenden Behältnisse ermöglicht. Auf diese Weise ist es möglich, Durchmesserdifferenzen der Behältermündungen bis zu +/- 3 mm zu verarbeiten.

Vorzugsweise sind an dem Greifkopf wenigstens zwei und bevorzugt wenigstens drei Halteelemente angeordnet. Durch eine Vielzahl derartiger Halteelemente können einerseits auch bei vergleichsweise geringer radialer Bewegung größere Toleranzen an Behältnissen verarbeitet werden, andererseits kann durch mehrere Halteelemente auch ein stabilerer Halt des Behältnisses an dem Greifkopf bzw. dem Greifelement erreicht werden.

Bei einer weiteren bevorzugten Ausführungsform ist wenigstens ein Abschnitt des Halteelements gegen die Innenwandung der Mündung als Behältnis pressbar. Auf diese Weise kann ein sicherer Halt des Behältnisses erreicht werden. Es wäre jedoch auch möglich, dass das Halteelement auf ein weiteres Element, etwa einen O-Ring, einwirkt und dieses an die Mündungs-Innenwand presst.

Bei einer weiteren vorteilhaften Ausführungsform sind an dem Greifkopf mehrere Halteelemente gleichmäßig über den Umfang des Greifkopfes verteilt. Auf diese Weise ist ebenfalls ein sehr stabiler Halt der Behältnisse an dem Greifkopf möglich. Bei einer weiteren vorteilhaften Ausführungsform weist das Greifelement fünf Halteelemente oder sieben Halteelemente auf. Diese Anzahl an Halteelementen, insbesondere fünf Halteelemente, hat sich als besonders vorteilhaft erwiesen, um einen stabilen Halt mit einer günstigen Verarbeitung unterschiedlicher Innendurchmesser der Behältnisse zu vereinbaren.

Vorzugsweise ist wenigstens ein Halteelement schwenkbar um eine vorgegebene Schwenkachse angeordnet. Durch diesen Schwenkvorgang wird dabei ein Bereich des Halteelementes radial nach außen bewegt, um das Behältnis gegenüber dem Greifkopf zu sichern.

Bei einer weiteren vorteilhaften Ausführungsform weist das Greifelement ein in einer Längsrichtung des Trägers bewegbaren Kolbenkörper auf, wobei durch eine Bewegung des Kolbenkörpers eine Bewegung wenigstens eines Halteelements auslösbar ist. Bei der Längsrichtung des Trägers handelt es sich dabei auch um die Längsrichtung des Behältnisses, welches an dem Greifelement angeordnet ist. Genauer gesagt, wird durch eine Bewegung des Kolbenkörpers die Bewegung des Halteelements zumindest auch in der radialen Richtung des Greifkopfes ausgelöst. Vorzugsweise ist der Kolbenkörper radial innerhalb der Halteelemente angeordnet. Besonders bevorzugt betätigt der Kolbenkörper mehrere der Halteelemente und besonders bevorzugt alle Halteelemente.

Vorzugsweise weist der Kolbenkörper eine in Umfangsrichtung des Kolbenkörpers ausgebildete erste Führungsfläche auf, die mit den Halteelementen zusammenwirkt, um diese zu bewegen. Dabei kann sich beispielsweise um Schrägflächen handeln, welche bei der Bewegung des Kolbens die Halteelemente radial nach außen drängen.

Bei einer weiteren vorteilhaften Ausführungsform weist der Greifkopf einen Abdeckkörper auf, innerhalb dessen die Halteelemente wenigstens teilweise angeordnet sind. Bei dem Abdeckkörper kann es sich um eine Abdeckung handeln, welche an der Unterseite des Greifkopfs angeordnet ist und welche vollständig in die Mündung des Behältnisses eingeführt werden kann. So ist vorzugsweise ein Außenumfang dieses Abdeckkörpers an den Innenumfang des Vorformlings angepasst und besonders bevorzugt geringfügig kleiner als dieser Innenumfang bzw. Innenquerschnitt. So ist es beispielsweise möglich, dass zumindest ein Teil der Halteelemente permanent innerhalb des Abdeckkörpers angeordnet ist, wie beispielsweise die Schwenkachse, um welche die Halteelemente geschwenkt werden können.

Bei einer weiteren vorteilhaften Ausführungsform weist der Abdeckkörper eine Vielzahl von in Umfangsrichtung des Abdeckkörpers angeordneten Öffnungen auf, durch welche hindurch sich die Halteelemente erstrecken. So ist es beispielsweise möglich, dass sich zum Greifen der Behältnisse die Halteelemente durch die Öffnungen hindurch radial nach außen erstrecken.

Bei einer weiteren vorteilhaften Ausführungsform weist der Abdeckkörper Wandungsabschnitte mit kreissegmentförmigem Außenumfang auf.

Bei einer weiteren vorteilhaften Ausführungsform weist das Greifelement eine Federungseinrichtung auf, welche den Kolbenkörper gegenüber dem Greifkopf vorspannt. Dabei ist es möglich, dass die Federungseinrichtung den Kolbenkörper nach oben hin vorspannt, d. h. weg von dem zu greifenden Behältnis.

Bei einer weiteren bevorzugten Ausführungsform weisen die Halteelemente eine erste Führungsfläche auf, welche mit dem Kolbenkörper zusammenwirkt, um die Halteelemente bei einer Bewegung des Kolbenkörpers in einer ersten Richtung radial nach außen zu bewegen sowie eine zweite Führungsfläche, welche mit dem Kolbenkörper zusammenwirkt, um die Halteelemente bei einer Bewegung des Kolbenkörpers in einer zweiten der ersten Richtung entgegengesetzten Richtung radial nach innen zu bewegen. Bei dieser Ausführungsform wird also sowohl die radiale Bewegung der Halteelemente nach außen als auch die radiale Bewegung nach innen durch eine Bewegung des Kolbenkörpers gegenüber dem Greifkopf bewirkt. Dies wird genauer unter Bezugnahme auf die Figuren erläutert.

Bei einer weiteren vorteilhaften Ausführungsform sind die Halteelemente bzw. die die Halteelemente führenden Elemente ausschließlich in einer radialen Richtung bewegbar. Weiterhin ist es möglich, dass die Halteelemente von einem flexiblen ringförmigen Körper nach radial nach innen vorgespannt sind. Daneben ist es beispielsweise möglich, dass ein ringförmiger Körper eingesetzt wird, der durch bezüglich dieses ringförmigen Körpers radial innen angeordnete Haltelemente, beispielsweise stiftartige Körper, radial nach außen vorgespannt werden kann und sich in diesem Fall an einen Innenumfang des Gewindes anlegt.

Weitere Vorteile und Ausführungsformen ergeben sich aus den beigefügten Zeichnungen:

Darin zeigen:
- Fig. 1: eine Schnittdarstellung eines erfindungsgemäßen Greifelements;
- Fig. 2: eine perspektivische Darstellung eines Teils des Greifelements aus Fig. 1;
- Fig. 3a: eine perspektivische Draufsicht von unten auf ein Greifelement gemäß Fig. 1;
- Fig. 3b: eine perspektivische Draufsicht von unten auf das Greifelement aus Fig. 1;
- Fig. 3c: eine Draufsicht von unten auf das Greifelement aus Fig. 1;
- Fig. 3d: eine perspektivische Draufsicht auf das in Fig. 3a gezeigte Greifelement;
- Fig. 4: ein Halteelement für ein erfindungsgemäßes Greifelement;
- Fig. 5: eine weitere Ausführungsform eines erfindungsgmäßen Greifelements;
- Fig. 6: eine Draufsicht von unten auf das Greifelement aus Fig. 5; und
- Fig. 7: eine perspektivische Darstellung des Greifelements aus Fig. 5.

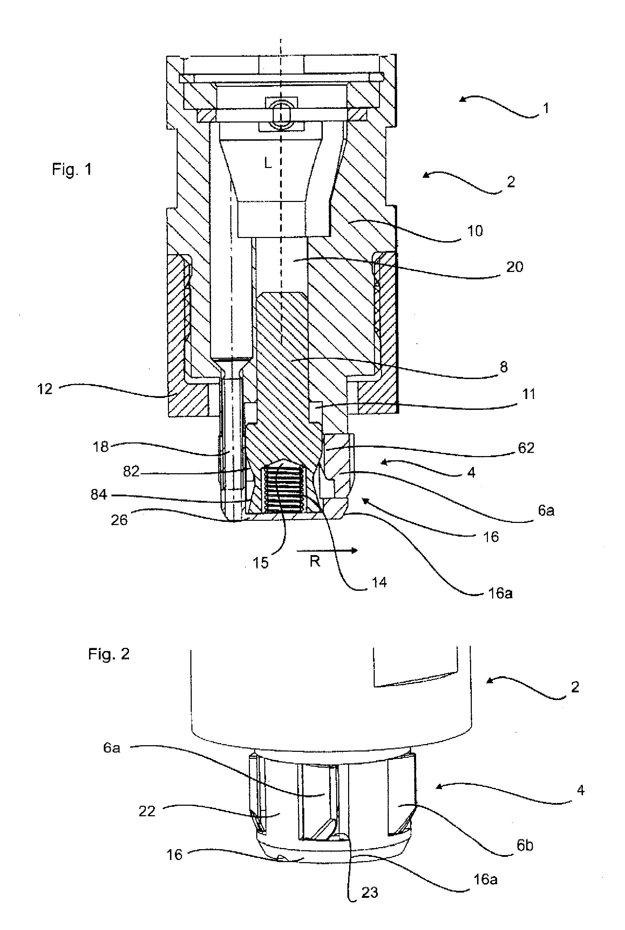

Fig. 1 zeigt ein erfindungsgemäßes Greifelement 1. Dieses Greifelement 1 weist dabei einen Träger 2 auf, an dem ein Greifkopf 4 angeordnet ist. Dieser Greifkopf 4 ist dabei in eine Mündung eines (nicht gezeigten) Behältnisses einführbar, um dieses von innen zu greifen. Mit Hilfe dieses Greifelements können die (nicht gezeigten) Behältnisse transportiert werden, beispielsweise durch eine Heizeinrichtung transportiert werden, welche diese vor dem eigentlichen Expansionsvorgang erwärmt.

Der Träger 2 weist dabei einen Grundkörper 10 und einen Hülsenkörper 12 auf. Mittels einer Befestigungseinrichtung wie einer Schraubeinrichtung 18 ist der Greifkopf 4 an diesen Grundkörper 10 angeschraubt. Dabei ist in Fig. 1 lediglich ein Schraubmittel gezeigt, es können jedoch mehrere, beispielsweise drei, Schraubmittel vorgesehen sein. Das Bezugszeichen 8 bezieht sich auf einen Kolbenkörper, der innerhalb einer Bohrung bzw. Ausnehmung 20 in einer Längsrichtung L des Greifelements bewegbar ist. Durch diese Längsbewegung des Kolbenkörpers 8 kann ein in Fig. 1 gezeigtes Halteelement 6a sowohl in der radialen Richtung R nach außen als auch nach innen bewegt werden. Das Bezugszeichen 14 bezieht sich auf eine Federeinrichtung, welche den Kolbenkörper 8 in Fig. 1 nach oben vorspannt. Diese Federungseinrichtung ist dabei in einer Ausnehmung 15 des Kolbenkörpers 8 angeordnet.

Der Kolbenköper 8 weist zwei Schrägflächen bzw. Führungsflächen 82 und 84 auf, welche zur Bewegung des Halteelements 6a und auch weiterer, nicht gezeigter Halteelemente dienen.

In dem Grundkörper 10 ist eine weitere Ausnehmung 11 angeordnet, innerhalb derer ein Bereich des Kolbenkörpers 8 bewegbar ist.

Fig. 2 zeigt eine perspektivische Darstellung eines Teils des erfindungsgemäßen Greifelements, genauer gesagt des Greifkopfes 4, der in die Mündung des Behältnisses eingeführt wird. An seiner Unterseite weist das Greifelement einen Abdeckkörper 16 auf, der in Umfangsrichtung eine Einführschräke 16a aufweist, um die Einführung in die Mündung des Behältnisses zu erleichtern.

Man erkennt in Fig. 2 zwei Halteelemente 6a, 6b welche schwenkbar sind. Auf diese Weise ist ein Bereich dieser Halteelemente 6a, 6b radial nach außen stellbar. Das Bezugszeichen 22 bezieht sich auf Wandungsabschnitte mit einem kreissegmentförmigen Außenumfang zwischen denen jeweils Öffnungen 23 vorgesehen sind, durch welche hindurch sich die Halteelemente erstrecken bzw. bewegen können. Diese Wandungsabschnitte 22 sind damit Bestandteil des Abdeckkörpers 16.

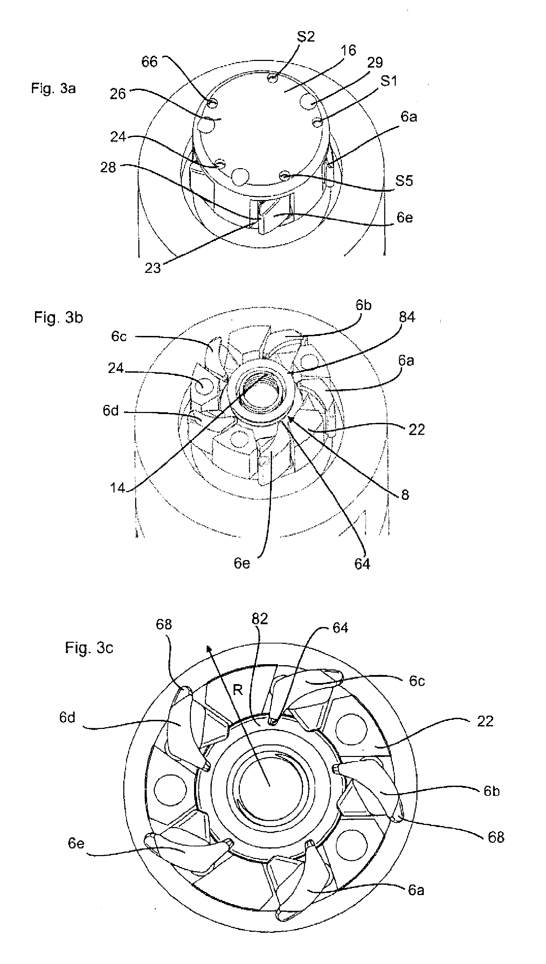

Fig. 3a zeigt eine Draufsicht von unten auf ein erfindungsgemäßes Greifelement. Man erkennt hier fünf Öffnungen 24 in dem Abdeckkörper 16 bzw. der unteren Platte 26 des Abdeckkörpers 16, in der die Halteelemente 6a - 6e mittels Schwenkachsen bzw. -wellen 66 geführt sind. Damit legen diese Öffnungen 24 auch Schwenkachsen S1 - S5 fest, um welche die Halteelemente 6a - 6e geführt sind. Weiterhin sind auch die Bereiche 29 erkennbar, in denen sich die in Fig. 1 gezeigten Schraubmittel in der Längsrichtung L erstrecken.

Fig. 3b zeigt eine Darstellung des Greifelements von unten wobei hier die untere Platte 26 abgenommen wurde. Man erkennt mehrere Segmente 22, welche starr angeordnet sind und einen kreissegmentförmigen Außenquerschnitt aufweisen. Diese Segmente 22 weisen teilweise Öffnungen 34 auf, um die Abdeckplatte 26 hieran anzuordnen.

Weiterhin ist in der Schnittdarstellung von Fig. 3b die Federungseinrichtung 14 erkennbar, welche dem Kolbenkörper nach oben vorspannt. Diese Federungseinrichtung 14 stützt sich dabei gegenüber der Bodenplatte 26 (vgl. Fig. 3a) ab. Weiterhin erkennt man in Fig. 3b die Ausgestaltung der Haltelemente 6a - 6e, die jeweils mit dem Kolbenkörper 8 zusammenwirken um nach außen oder nach innen gedrängt zu werden.

Fig. 3c zeigt eine Draufsicht von unten auf ein erfindungsgemäßes Greifelement. Die Haltelemente 6a - 6e sind dabei, wie oben erwähnt, um eine vorgegebene Schwenkachse schwenkbar und auf diese Weise wird eine zumindest auch radiale Bewegung des Abschnitts 68 der Halteelemente radial nach außen bzw. radial nach innen bewirkt.

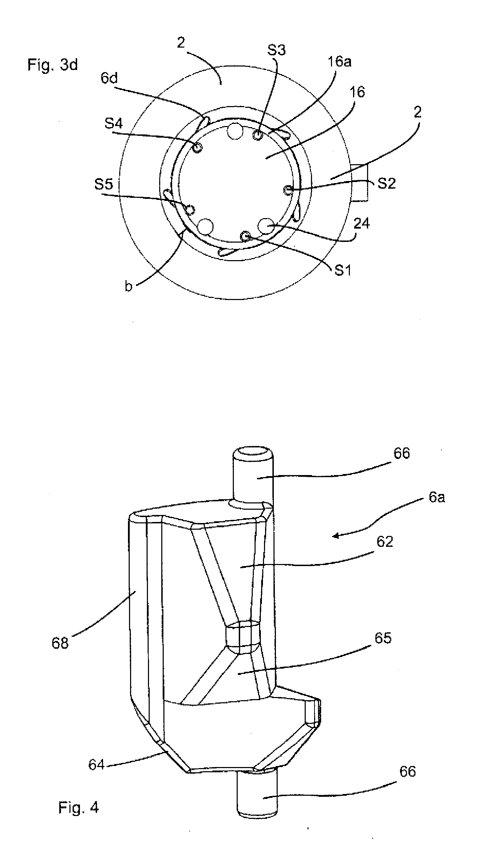

Fig. 3d zeigt eine weitere Darstellung eines vollständigen Greifelements von unten, wobei hierbei auch der Grundkörper 2 dargestellt ist. Die Halteelemente 6a sind dabei in dem radialen Bereich r des Greifelements bewegbar und durch diesen Verstellweg wird auch die radiale Toleranz der zu greifenden Behältnisse festgelegt.

Fig. 4 zeigt eine perspektivische Darstellung eines Halteelements 6a. Dabei bezieht sich das Bezugszeichen 66 auf eine Schwenkachse, um welche das Halteelement schwenkbar ist. Das Bezugszeichen 68 kennzeichnet einen Anpressabschnitt des Halteelements 6a der an eine Innenwandung des Behältnisses pressbar ist. Weiterhin weist das Halteelement eine Schrägfläche bzw. Führungsfläche 62 auf, welche mit dem Abschnitt 82 des in Fig. 1 gezeigten Kolbenkörpers 8 zusammenwirkt. Bei einer Bewegung des Kolbenkörpers in der Längsrichtung von Fig. 1 nach unten berührt die Fläche 62 die Fläche 82 des Kolbenkörpers und auf diese Weise wird das Halteelement 6a um die Schwenkachse 66 geschwenkt und nach außen gedrückt.

Das Bezugszeichen 64 kennzeichnet eine weitere Schrägfläche, die mit dem Abschnitt 84 des Kolbenkörpers 8 zusammenwirkt und daher bei einer Bewegung des Kolbenkörpers 8 in der Längsrichtung L von Fig. 1 nach oben einen Rückstellung des Halteelements 6a bewirkt. Auf diese Weise kann durch ein Zusammenwirken der Schrägflächen 62 und 64 mit den Flächen 82 und 84 des Kolbenkörpers 8 sowohl eine Verstellung der Halteelemente 6a - 6e nach außen als auch das Rückziehen der Halteelemente erreicht werden, je nach der Bewegungsrichtung des Kolbenkörpers 8. Das Bezugszeichen 65 kennzeichnet eine weitere Führungsfläche.

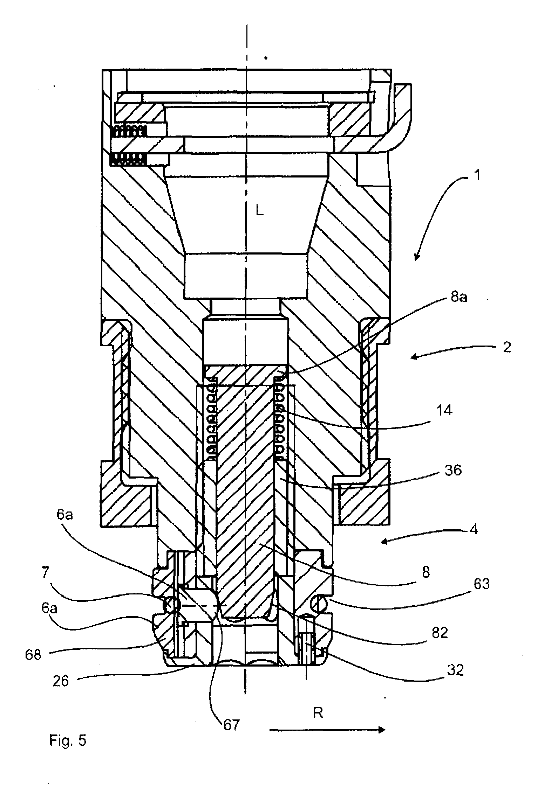

Fig. 5 zeigt eine weitere Ausführungsform eines erfindungsgemäßen Greifelements. Auch hier ist, wie in dem oben gezeigten Fall, ein Träger 2 vorgesehen, an dem ein Greifkopf 4 angeordnet ist. Auch diese Ausführungsform sieht einen Kolbenkörper 8 vor, der in einer Längsrichtung L des Greifelements 1 verschiebbar ist und hier ebenfalls durch eine Federeinrichtung 14 nach oben vorbelastet ist. Im Gegensatz zu der in Fig. 1 gezeigten Ausführungsform ist hier jedoch die Federeinrichtung 14 weiter oben, d. h. im Inneren des Trägers 2 angeordnet.

Genauer gesagt ist ein Zylinderkörper 36 vorgesehen, dem gegenüber sich die Federeirichtung 14 abstützt. Andererseits stützt sich die Federeinrichtung 14 auf einen Vorsprung 8a des Kolbenkörpers 8 ab.

An seinem unteren Ende weist der Kolbenkörper 8 eine kegelförmige Umfangsfläche 82 auf, welche mit den Halteelementen 6a zusammenwirkt, um diese in der radialen Richtung R zu bewegen.

Die Halteelemente 6a weisen dabei einen Kontaktabschnitt 67 auf, der mit dem Kolbenkörper 8 zusammenwirkt sowie dem Bereich 68, der mit der Innenwandung des (nicht gezeigten) Behältnisses zusammenwirkt.

Das Bezugszeichen 32 bezieht sich hier wieder auf eine Verschraubungseinrichtung, um eine Platte 26 an dem Greifkopf 4 anzuordnen. Das Bezugszeichen 7 bezieht sich auf eine Vorspanneinrichtung wie hier ein O-Ring, der sich in Umfangsrichtung um sämtliche Halteelemente 6a erstreckt bzw. der in einer von den Halteelementen gebildeten Nut 63 einliegt. Dieser O-Ring spannt dabei die einzelnen Halteelemente 6a - 6e radial nach innen vor und bewirkt damit, falls der Kolbenkörper 8 in der Längsrichtung L nach oben bewegt wird, eine Rückstellung der einzelnen Halteelemente 6a - 6e.

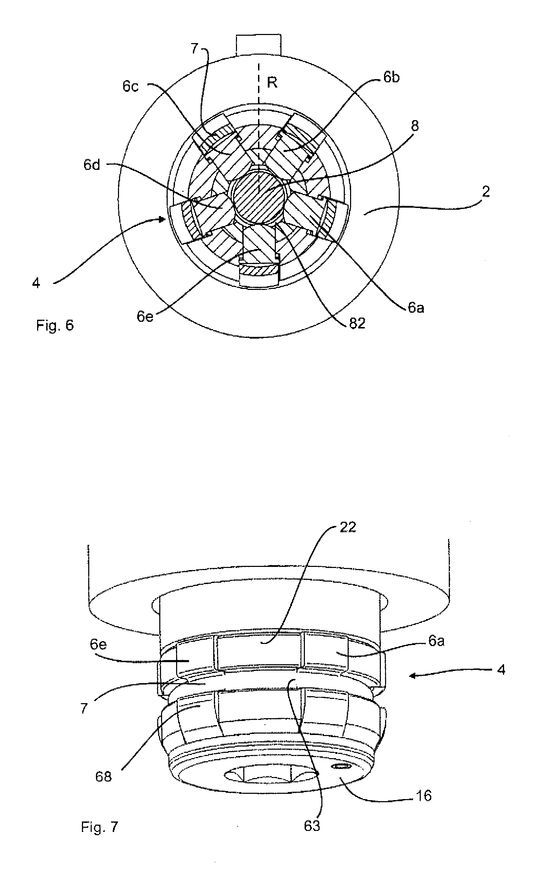

Fig. 6 zeigt eine Draufsicht von unten auf ein erfindungsgemäßes Greifelement in der zweiten Ausführungsform. Man erkennt hier wiederum die fünf Halteelemente 6a - 6e, welche bei der in Fig. 6 gezeigten Situation nach außen vorgespannt sind, d. h. in diesem Falle ist der Kolbenkörper 6 nach unten bewegt. Weiterhin ist in der Darstellung auch abschnittsweise der O-Ring 7 erkennbar, der die Halteelemente wieder in der radialen Richtung R rückstellt.

Fig. 7 zeigt eine perspektivische Darstellung eines Greifkopfes 14. Dabei sind hier zwei Halteelemente 6a, 6e erkennbar, die jeweils radial nach außen ausgerückt sind. In der oben beschriebenen Nut 63, welche sowohl von den Halteelementen 6a - 6e als auch von den dazwischenliegenden Abschnitten 22 gebildet wird, ist der O-Ring 7 angeordnet, um die Halteelemente nach innen vorzuspannen. Das Bezugszeichen 68 kennzeichnet wieder den Kontaktbereich, der sich an die Innenwandung des (nicht gezeigten) Behältnisses bzw. Vorformlings andrückt.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Greifelement (1) zum Greifen von Kunststoffbehältnissen mit Mündungen und insbesondere von Vorformlingen, mit einem Träger (2), an dem ein Greifkopf (4) angeordnet ist, der wenigstens teilweise in eine Mündung des Kunststoffbehältnisses einführbar ist, **dadurch gekennzeichnet, dass** an dem Greifkopf (4) wenigstens ein Halteelement (6a, 6b, 6c, 6d, 6e) angeordnet ist, welches wenigstens abschnittsweise in einer bezüglich des Greifkopfes (4) radialen Richtung (R) bewegbar, um das Behältnis gegenüber dem Greifkopf (4) zu sichern.

2. Greifelement (1) nach Anspruch 1, **dadurch gekennzeichnet, dass** an dem Greifkopf (4) wenigstens zwei und bevorzugt wenigstens drei Halteelemente (6a, 6b, 6c, 6d, 6e) angeordnet sind.

3. Greifelement (1) nach wenigstens einem der vorangegangenen Ansprüche **dadurch gekennzeichnet, dass** wenigstens ein Abschnitt wenigstens eines Haltelements (6a - 6e) gegen die Innenwandung der Mündung (10a) pressbar ist.

4. Greifelement (1) nach wenigstens einem der vorangegangenen Ansprüche, **dadurch gekennzeichnet, dass** an dem Greifkopf (4) mehrere Haltelemente (6a, 6b, 6c, 6d, 6e) gleichmäßig über den Umfang des Greifkopfes (4) verteilt sind.

5. Greifelement (1) nach wenigstens einem der vorangegangenen Ansprüche, **dadurch gekennzeichnet, dass** wenigstens ein Halteelement (6a, 6b, 6c, 6d, 6e) schwenkbar um eine vorgegebene Schwenkachse (S1, S2, S3, S4, S5, S6) angeordnet ist.

6. Greifelement (1) nach wenigstens einem der vorangegangenen Ansprüche, **dadurch gekennzeichnet, dass** das Greifelement (1) einen in einer Längsrichtung (L) des Trägers (2) bewegbaren Kolbenkörper (8) aufweist, wobei durch eine Bewegung dieses Kolbenkörpers (8) eine Bewegung wenigstens eines Halteelements (6a, 6b, 6c, 6d, 6e) auslösbar ist.

7. Greifelement nach Anspruch 6, **dadurch gekennzeichnet, dass** der Kolbenkörper (8) eine in Umfangsrichtung des Kolbenkörpers (8) ausgebildete erste Führungsfläche (82) aufweist, die mit den Halteelementen (6a, 6b, 6c, 6d, 6e) zusammenwirkt, um diese zu bewegen.

8. Greifelement (1) nach wenigstens einem der vorangegangenen Ansprüche, **dadurch gekennzeichnet, dass** der Greifkopf (4) einen Abdeckkörper (16) aufweist, innerhalb dessen die Halteelemente (6a, 6b, 6c, 6d, 6e) wenigstens teilweise angeordnet sind.

9. Greifelement (1) nach Anspruch 8, **dadurch gekennzeichnet, dass** er Abdeckkörper (16) eine Vielzahl von in Umfangsrichtung angeordneten Öffnungen aufweist, durch welche hindurch sich die Halteelemente (6a, 6b, 6c, 6d, 6e) erstrecken.

10. Greifelement (1) nach Anspruch 8, **dadurch gekennzeichnet, dass** der Abdeckkörper (16) Wandungsabschnitte (22) mit kreissegmentförmigem Außenumfang aufweist.

11. Greifelement (1) nach wenigstens einem der vorangegangenen Ansprüche, **dadurch gekennzeichnet, dass** das Greifelement (1) eine Federungseinrichtung (14) aufweist, welche den Kolbenkörper gegenüber dem Greifkopf (4) vorspannt.

12. Greifelement (1) nach Anspruch 6, **dadurch gekennzeichnet, dass** die Halteelemente (6a, 6b, 6c, 6d, 6e) eine erste Führungsfläche (62) aufweisen, welche mit dem Kolbenkörper (8) zusammenwirkt, um die Halteelemente bei einer Bewegung des Kolbenkörpers (8) in einer ersten Richtung radial nach außen zu bewegen sowie eine zweite Führungsfläche (64), welche mit dem Kolbenkörper zusammenwirkt, um die Halteelemente (6a, 6b, 6c, 6d, 6e) bei einer Bewegung des Kolbenkörpers (8) in einer zweiten, der ersten Richtung entgegengesetzten Richtung radial nach innen zu bewegen.

13. Greifelement (1) nach wenigstens einem der vorangegangenen Ansprüche, **dadurch gekennzeichnet, dass** die Halteelemente (6a, 6b, 6c, 6d, 6e) ausschließlich in einer radialen Richtung bewegbar sind.

14. Greifelement (1) nach wenigstens einem der vorangegangenen Ansprüche, **dadurch gekennzeichnet, dass** die Halteelemente (6a, 6b, 6c, 6d, 6e) von einen flexiblen Körper radial nach innen vorgespannt sind.

15. Vorrichtung zum Transportieren von Kunststoffbehältnissen (10) mit einer Vielzahl von Greifelementen (1) nach wenigstens einem der vorangegangenen Ansprüche.
